# EUROPÄISCHE PATENTSCHRIFT

(11) **EP 1 776 323 B1**
(45) Veröffentlichungstag und Bekanntmachung des Hinweises auf die Patenterteilung: **21.07.2010**
(21) Anmeldenummer: 05756851.1
(22) Anmeldetag: 30.06.2005
(51) Int. Cl.: C04B 35/567, C04B 14/06, C04B 35/66, C04B 38/00

(54) **VERSATZ ZUR ERSTELLUNG EINES FEUERFESTEN KERAMISCHEN FÖRMKÖRPERS, VERFAHREN ZU SEINER HERSTELLUNG SOWIE SEINE VERWENDUNG ALS DIESELPARTIKELFILTER**
BATCH FOR PRODUCING A FIREPROOF CERAMIC MOULDED BODY, METHOD FOR THE PRODUCTION OF THE SAME AND USE THEREOF AS A DIESEL PARTICULATE FILTER
MELANGE POUR REALISER UN ELEMENT MOULE EN CERAMIQUE REFRACTAIRE, PROCEDES DE FABRICATION ASSOCIES ET UTILISATION COMME FILTRE A PARTICULES POUR MOTEURS DIESELS

(30) Priorität: 21.07.2004 DE 102004035334
(43) Veröffentlichungstag der Anmeldung: 25.04.2007
(73) Patentinhaber: FACHHOCHSCHULE KOBLENZ, 56075 Koblenz-Oberwerth (DE)
(72) Erfinder: KRIEGESMANN, Jochen, 56203 Höhr-Grenzhausen (DE)
(74) Vertreter: Berkenbrink, Kai-Oliver
(86) Internationale Anmeldenummer: PCT/EP2005/007052
(87) Internationale Veröffentlichungsnummer: WO 2006/007950

(56) Entgegenhaltungen:
- WO-A-2005/005016
- US-A1- 2002 160 902
- US-A1- 2003 148 063
- US-B1- 6 582 796
- KRIEGESMANN J ET AL: "DAS KONSOLIDIERUNGSVERHALTEN VON BESONDERS FEINTEILIGEM REKRISTALLISIERTEM SLICIUMCARBID, 1 CONSOLIDATION BEHAVIOUR OF EXTREMELY FINE GRAINED RECRYSTALLIZED SILICON CARBIDE, I" KERAMISCHE ZEITSCHRIFT, FREIBURG, DE, Bd. 51, Nr. 8, 1999, Seiten 648-652, XP009037194
- KRIEGESMANN J ET AL: "CHARAKTERISIERUNG DES KONSOLIDIERENS VON FEINTEILIGEM, BIMODALEN SIC" CFI. CERAMIC FORUM INTERNATIONAL, DE, Bd. 79, Nr. 12, Dezember 2002 (2002-12), Seite D32,E37,E44, XP009037199 ISSN: 0173-9913
- PATENT ABSTRACTS OF JAPAN Bd. 1998, Nr. 11, 30. September 1998 (1998-09-30) & JP 10 167854 A (IBIDEN CO LTD), 23. Juni 1998 (1998-06-23)

## Beschreibung

Die Erfindung betrifft einen Versatz zur Erstellung eines feuerfesten keramischen RSiC-Formkörpers mit einer porösen Matrix, ein Verfahren zur Herstellung des Formkörpers sowie einen daraus hergestellten RSiC-Formkörper und seine Verwendung als Dieselpartikelfilter.

Feuerfeste keramische Formkörper mit einer porösen Matrix lassen sich insbesondere auch aus nichtoxidischen keramischen Werkstoffen herstellen. Die aus nichtoxidischen keramischen Werkstoffen hergestellten, feuerfesten keramsichen Formkörper zeichnen sich durch eine hohe Feuerfestigkeit und eine hohe physikalische Festigkeit aus.

Als nichtoxidische keramische Werkstoffe sind insbesondere Carbide, Nitride, Boride und Silicide von Hauptgruppenelementen, zum Beispiel Siliciumnitrid, Borcarbid, Bornitrid und insbesondere Siliciumcarbid bekannt.

Letzteres wird üblicherweise aus einer SiO₂- sowie einer Kohlenstoffkomponente, üblicherweise Quarzsand und Petrolkoks, nach dem Acheson-Verfahren synthetisiert. Dazu wird eine Schüttung eines Gemisches aus Quarzsand und Petrolkoks bei etwa 2400 °C mehrere Stunden zu Siliciumcarbid (SiC) gesintert.

Das gesinterte SiC-Material wird zerkleinert und zu verschiedenen Korngrößen aufbereitet.

Gesintertes Siliciumcarbid tritt in einer kubischen Tieftemperaturmodifikation (β-SiC) und einer hexagonalen Hochtemperaturmodifikation (α-SiC) auf. Da nur sehr feine SiC-Körnungen eine selbstständige Sinterfähigkeit im keramischen Sinne besitzen, wird bei vielen SiC-Feuerfestwerkstoffen wegen der fehlenden Sinterfähigkeit mit artfremden Bindungen gearbeitet, zum Beispiel mit einer oxidischen oder silikatischen Bindung (Gemische aus SiC-Körnungen und Ton, Al₂O₃ oder SiO₂ werden in oxidischer Atmosphäre gebrannt; die mechanischen Eigenschaften sowie der Korrosionswiderstand der daraus hergestellten Werkstoffe sind durch die oxidischen und silikatischen Phasen zwischen den SiC-Körnern stark eingeschränkt) oder mit stickstoffhaltigen Bindersystemen. Ein SiC-Formkörper mit einer artfremden Bindung wird in US 6,582,796 beschrieben.

Eine der hochwertigsten Bindungsvarianten ist die sogenannte arteigene SiC-Bindung, bei der ein Gemisch aus groben SiC-Körnern und feinen Sir-körnern zunächst geformt und anschließend unter Argon- oder Stickstoff-Schutzgasatmosphäre bei hohen Temperaturen zu rekristallisiertem SiC (RSiC) gesintert wird.

Der dadurch erstellte keramische Formkörper auf Basis RSiC zeichnet sich durch eine sehr hohe Festigkeit, Wärmeleitfähigkeit sowie Thermoschock- und Korrosionsbeständigkeit aus. Formkörper auf Basis RSiC können damit zahlreichen Anwendungen zugeführt werden, bei denen hochfeste und insbesondere auch hochfeuerfeste Werkstoffe benötigt werden; sie werden beispielsweise im Ofenbau als Brennerdüsen, als Rollen oder als Brennhilfsmittel verwendet.

Das Konsolidierungsverhalten von feinteiligem SiC wird beispielsweise beschreiben in Kriegesmann J et al: "Das Konsolidierungsverhalten von besonders feinteiligem rekristallisiertem Siliciumcarbid", Keramische Zeitschrift, Freiburg, DE, Bd. 51, Nr. 8, 1999, Seiten 648 - 652 und Kriegesmann J. et al: "Charakterisierung des Konsolidierens von feinteiligem, bimodalen SiC" CSI, Ceramic Forum International, DE, Bd. 79, Nr. 12, Dezember 2002, Seite D 23, E 37, E 44.

Aufgrund der hohen Temperaturen von circa 2400 °C, die notwendig sind, um Siliciumcarbidhaufwerke zu rekristallisiertem Siliciumcarbid zu sintern, sind die für den Sinterbrand benutzten Öfen auf ihrer Innenseite mit Graphit ausgekleidet. Der Brand darf daher nicht bei einer oxidativen Atmosphäre durchgeführt werden, da das Graphit sonst oxidieren und die Ofenauskleidung damit zerstört werden würde.

Übliche organische Binder, die zur Formgebung von nichtoxidischen keramischen Werkstoffen benötigt werden, können jedoch regelmäßig allein in einer oxidativen Ofenatmosphäre aus dem Formkörper ausgetrieben werden.

Wenn zur Formgebung des Formkörpers aus SiC daher Formgebungsverfahren angewendet werden sollen, bei denen ein hoher organischer Binderanteil notwendig ist, wie beispielsweise beim Spritzgießen, Extrudieren oder Foliengießen, muss der Binder vor dem Sinterbrand in einem gesonderten Brennprozess oxidativ aus dem Formkörper entfernt werden. Denn würde der organische Binder unter Schutzgasatmosphäre beim Sinterbrand thermisch behandelt werden, würde nur eine Pyrolyse des Binders stattfinden, so dass der im Binder enthaltene Kohlenstoff vercracken und das Sintern der SiC-Körner behindern würde. Ein hierdurch hergestellter RSiC-Formkörper würde sich durch erheblich verschlechterte Feuerfestigkeitswerte auszeichnen.

Einzig bei einer Formgebung eines SiC-Versatzes durch ein Schlickergießverfahren ist die Verwendung eines organischen Binders nicht notwendig. Durch ein Schlickergießverfahren lassen sich jedoch nur sehr einfach geformte geometrische Körper, beispielsweise Platten oder einfach geformte Hohlkörper, wirtschaftlich herstellen.

Gegebenenfalls können Pressversätze mit nur sehr geringen organischen Binderanteilen eingesetzt werden; auch hier lassen sich jedoch nur einfache geometrische Formen, wie Zylinder oder Quader, herstellen.

Zur Herstellung von Formkörpern auf Basis SiC mit komplizierten und filigranen Strukturen muss daher auf Formgebungsverfahren wie das Spritzgießen, Heißgießen, Extrudieren oder Foliengießen zurückgegriffen werden, was jedoch, wie zuvor ausgeführt, einen gesonderten Temperaturbehandlungsprozess zur oxidativen Entfernung des Binderanteils erfordert.

Für weitere nichtoxidische keramische Werkstoffe gilt das zuvor ausgeführte weitgehend entsprechend.

Eine weitere Technik zur Herstellung von Formkörpern auf Basis SiC ist die Infiltrierung in Verbindung mit dem Reaktionsbinden. Hierbei wird ein Formkörper aus SiC-Teilchen und Kohlenstoff über eine Docht- oder Schüttinfiltration mit Silicium bei Temperaturen oberhalb seines Schmelzpunktes (1410°C) imprägniert, wobei alle Poren durch Silicium gefüllt werden und der Kohlenstoff mit dem Silicium zu sekundärem SiC reagiert. Der dabei entstehende Werkstoff ist dicht bei einer offenen Porosität von unter 3%. Aufgrund dieser geringen Porosität kommt infiltriertes SiC für zahlreiche Anwendungen, zum Beispiel Anwendungen als Filter nicht in Frage.

Der Erfindung liegt die Aufgabe zugrunde, einen Versatz sowie ein Verfahren zur Verfügung zu stellen, durch welche poröse keramische RSiC-Formkörper durch nur einen einzigen Temperaturbehandlungsprozess hergestellt werden können, und zwar auch, wenn die Formkörper eine komplizierte Geometrie aufweisen.

Diese Aufgabe wird zum einen gelöst durch einen Versatz zur Erstellung eines feuerfesten keramischen RSiC-Formkörpers mit einer porösen Matrix, enthaltend
- eine Körnung aus Siliciumcarbid,
- ein organisches Bindemittel und
- wenigstens eine der folgenden Komponenten: Eine SiO₂-Komponente oder eine unter thermischer Behandlung SiO₂-bildende Komponente in einem Anteil zwischen 2 und 35 Masse-%,
wobei die Kornverteilung und -größe gemäß Anspruch 1 charakterisiert ist.

Ferner wird die Aufgabe gelöst durch ein Verfahren zur Herstellung eines feuerfesten Formkörpers mit einer porösen Matrix aus dem vorgenannten Versatz, wobei der Versatz zunächst zum Formkörper geformt und anschließend durch thermische Behandlung zu einem keramischen Formkörper gesintert wird.

Der Erfindung liegt die Erkenntnis zugrunde, dass die Pyrolyse des organischen Binders beziehungsweise das Vercracken des darin enthaltenen Kohlenstoffs, der regelmäßig etwa 35 bis 55 Masse-% des Binderanteils ausmacht, dadurch verhindert werden kann, dass dem Versatz aus SiC, und dem organischen Bindemittel eine seine SiO₂-Komponente oder eine unter thermischer Behandlung SiO₂-bildende Komponente zugegeben wird. Es wird angenommen, dass sich durch die Zugabe der SiO₂-Komponente beziehungsweise der SiO₂-bildenden Komponente während des Brenn- beziehungsweise Sintervorgangs ein Vorgang entsprechend der carbothermischen Reaktion

SiO₂ (s) + 3C (s) ↔ SiC (s) + 2CO (g)

einstellt, der Kohlenstoffanteil des organischen Binders also mit der SiO₂-Komponente beziehungsweise der SiO₂ bildenden Komponente zu SiC und CO reagiert.

Es wird daher nur ein Brennvorgang benötigt, um das organische Bindemittel aus dem Formkörper auszutreiben und den Formkörper zu sintern; auf den bisher notwendigen gesonderten Brennprozess zum Entfernen des Binders kann verzichtet werden.

Ferner wurde festgestellt, dass die zur Sinterung der nichtoxidischen keramischen Komponente notwendige Temperatur bei Anwesenheit von SiO₂ im Versatz erheblich niedriger ist als ohne einen SiO₂-Anteil im Versatz.

Das bei der oben dargestellten Reaktion gebildete, gasförmige CO reagiert nicht mit der Graphitauskleidung des Ofens, sondern kann aus dem Ofen abgezogen werden, während sich das gebildete SiC auf der Oberfläche der bereits vorhandenen SiC-Körner absetzt.

Der Versatz sintert dabei weitgehend schwindungsfrei, so dass der Formkörper während des Sintervorgangs eine hohe Formstabilität aufweist.

Das vom Bindemittel in ungebrannten Formkörper eingenommene Volumen wird während des Sintervorgangs zu weiten Teilen frei, so dass sich Formkörper mit hohen offenen Porositäten zwischen 15 und 35 Volumen-% herstellen lassen.

Als nichtoxidische keramische Komponente wird Siliciumcarbid (SiC) eingesetzt. Durch die thermische Behandlung kann diese, wie oben ausgeführt, zu rekristallisiertem Siliciumcarbid (RSiC) gesintert werden, so dass man durch das anmeldungsgemäße Verfahren einen feuerfesten, keramischen RSiC-Formkörper erhält.

Als SiC-Modifikation kann sowohl β-SiC als auch α-SiC eingesetzt werden, bevorzugt jedoch α-SiC.

SiC kann insbesondere in Pulverform eingesetzt werden, also beispielsweise ausschließlich in Körnungen unter 120 µm.

Es ist vorgesehen, dass das SiC eine bi-modale Kornverteilung aufweist, also einen Grob- und einen Feinkornanteil. Das SiC weist im Versatz einen Grobkornanteil zwischen 50 und 90 Masse-%, bevorzugt zwischen 60 und 80 Masse-% und einen Feinkornanteil zwischen 10 und 50 Masse-%, bevorzugt zwischen 20 und 40 Masse-% auf (jeweils bezogen auf den Anteil an SiC im Versatz).

Das Grobkorn des SiC kann zum Beispiel eine Korngröße zwischen 2 und 120 µm, vorzugsweise eine Korngröße zwischen 2 und 25 µm, vorzugsweise zwischen 2 und 10µm aufweisen. Das Grobkorn kann eine mittlere Korngröße, bestimmt als d₅₀, von unter 30µm aufweisen, beispielsweise eine mittlere Korngröße unter 21µm und über 2µm.

Das Feinkorn des SiC weist eine Korngröße unter 2µm auf, bevorzugt weist es eine Korngröße unter 1µm auf, vorzugsweise eine Korngröße zwischen 0,1 und 1µm. Die BET des Feinkorn kann beispielsweise im Bereich zwischen 3 und 50 m²/g, vorzugsweise im Bereich zwischen 5 und 30 m²/g liegen.

Durch eine wie vorstehend beschriebene Kornverteilung erhält man einen Versatz mit hervorragenden Sintereigenschaften; gleichzeitig lässt sich die Porosität eines aus dem Versatz hergestellten Formkörpers sehr genau einstellen, da sich das Feinkorn in den Zwickeln zwischen dem Grobkorn anordnen kann.

Zur Erstellung des anmeldungsgemäßen Versatzes können grundsätzlich beliebige organische Bindemittel eingesetzt werden, beispielsweise auch mehrere organische Bindemittel in Kombination miteinander. Beispielsweise können eines oder mehrere der folgenden organischen Bindemittel eingesetzt werden:
- natürliche, modifizierte natürliche, teilsynthetische und synthetische Wachse (zum Beispiel Paraffine, Esterwachse, Amidwachse, Polyehtylenwachse);
- wasserlösliche oder wasserdispergierbare Polymere (zum Beispiel Polyvinylalkohol, Polyethylenglykol, Celluloseether);
- lösemittelhaltige Systeme (zum Beispiel Kunstharze, Lackrohstoffe, Klebstoffe wie: Epoxidharze, Polyvinylbutyrale, Polyvinylacetate);
- thermoplastische Systeme (zum Beispiel Paraffine, Montanwachse, Polyolefinwachse, Polypropylen (PP), Polyethylen (PE), Polyacetate, Polyoxymetylen (POM)).

Die SiO₂-Komponente ist eine reine SiO₂-Komponente (bevorzugt Quarz, aber beispielsweise auch Tridymit, Cristobalit, hochdisperse Kieselsäure, Kieselsol oder Glaspulver).

Die SiO₂-bildende Komponente bildet während des Konsolidierungsbrandes, also des Sinterbrandes von SiC zu RSiC, SiO₂ aus. Die SiO₂-bildende Komponente kann beispielsweise eine siliciumorganische Komponenten sein; beispielsweise kann sie wenigstens ein Silicium-Alkoxid, ein Organosilan oder ein Acetoxysilan umfassen.

Die SiO₂-Komponente, beispielsweise Quarz, wird in Pulverform zugegeben. Die SiO₂-Komponente kann beispielsweise in einer Korngröße unter 20µm vorliegen, also beispielsweise in einer Korngröße zwischen 1 und 20µm, vorzugsweise zwischen 2 und 10µm, vorzugsweise zwischen 3 und 8µm.

Bei der Konsolidierung von SiC nach dem Achseon-Verfahren weisen die SiC-Körner auf ihrer Oberfläche eine dünne Schicht aus SiO₂ auf, die bisher regelmäßig mittels Flusssäure entfernt wurde. Nachdem im Rahmen der Erfindung die positiven Wirkungen einer SiO₂-Komponente in einem Versatz aus SiC-Körnern und organischem Bindemittel erkannt wurden, liegt ein vorteilhafter Aspekt der Erfindung auch darin, dass auf die Entfernung der SiO₂-Schicht auf der Oberfläche der SiC-Körner nunmehr verzichtet werden kann.

Der SiO₂-Anteil auf der Oberfläche der SiC-Körner kann zumindest einen Anteil des erfindungsgemäßen SiO₂-Anteils im Versatz ausmachen, wenngleich dieser Anteil in der Regel nicht ausreichen dürfte, den Gesamtbedarf an SiO₂ im Versatz zu decken.

Anmeldungsgemäß kann der Versatz beispielsweise einen Anteil an
- Siliciumcarbid zwischen 30 und 97 Masse-%, vorzugsweise zwischen 40 und 80 Masse-%, vorzugsweise zwischen 50 und 70 Masse-%,
- an organischem Bindemittel zwischen 1 und 55 Masse-%, bevorzugt zwischen 1 und 50 Masse-%, bevorzugt zwischen 1 und 40 Masse-% aufweisen.

Der Versatz weist einen Anteil an der SiO₂-Komponente beziehungsweise der SiO₂-bildenden Komponente zwischen 2 und 35 Masse-%, vorzugsweise zwischen 7 und 20 Masse-%, auf.

Die vorgenannten Angaben in Masse-% beziehen sich jeweils auf die Gesamtmasse des Versatzes.

Der Anteil an organischem Bindemittel im Versatz kann insbesondere auf das Formgebungsverfahren, mit dem der Versatz zum Formkörper geformt werden soll, abgestimmt sein.

Der Anteil an organischem Bindemittel im Versatz (wiederum bezogen auf die Gesamtmasse des Versatzes) kann für die folgenden Formgebungsverfahren daher beispielsweise wie folgt sein:
- Pressen: 1 bis 5 Masse-%, bevorzugt 2 bis 4 Masse-%.
- Spritzgießen, Heißgießen, Extrudieren oder Foliengießen: 10 bis 55 Masse-%, bevorzugt 10 bis 35 Masse-%, bevorzugt 15 bis 30 Masse-%.

Der anmeldungsgemäße Versatz zeichnet sich insbesondere auch dadurch aus, dass er neben den vorgenannten Komponenten keine weiteren Komponenten aufweisen muss. Der Anteil an weiteren Komponenten, beispielsweise der Anteil an Al₂O₃ oder sonstigen Tonmineralen, die das Sinterverhalten oder die Festigkeitseigenschaften des aus dem Versatz hergestellten Formkörpers gegebenenfalls auch negativ beeinflussen könnten, liegen unter 2 Masse-%, vorzugsweise unter 1%, vorzugsweise unter 0,5 Masse-%.

Dem Versatz können beispielsweise allein weitere Komponenten zur Verbesserung der Formgebung des Versatzes beigefügt sein, beispielsweise Dispergier-, Netz- oder Gleitmittel, beispielsweise in Anteilen zwischen 0,1 und 1 Masse-% (wiederum bezogen auf die Gesamtmasse des Versatzes).

Der anmeldungsgemäße Versatz kann grundsätzlich durch ein beliebiges Formgebungsverfahren zum Formkörper geformt werden.

Insbesondere kann der Versatz, aufgrund des hohen möglichen Bindemittelanteils, auch hervorragend durch Foliengießverfahren zum Formkörper geformt werden.

Der anmeldungsgemäße Versatz kann beispielsweise bei Temperaturen zwischen 1800 °C und 2500°C, vorzugsweise zwischen 1800°C und 2300°C, vorzugsweise zwischen 1850°C und 2150°C und noch bevorzugter zwischen 1900°C und 2100°C gesintert werden.

Der Sinterbrand erfolgt, insbesondere beim Brand in einem mit Graphit ausgekleidetem Brennraum, bevorzugt unter Schutzgasatmosphäre, also beispielsweise unter Argon- oder Stickstoffatmosphäre.

Zur Herstellung von Formkörpern aus RSiC mussten die SiC-Körner bisher bei Temperaturen von etwa 2400°C zu RSiC gesintert werden; der anmeldungsgemäße Versatz kann demnach bei deutlich niedrigeren Temperaturen gesintert werden, was mit einer erheblichen Energieeinsparung verbunden ist.

Nach dem anmeldungsgemäßen Verfahren und durch den anmeldungsgemäßen Versatz lassen sich hochporöse RSiC-Formkörper herstellen, beispielsweise RSiC-Formkörper, deren Dichte 30 bis 85 %, vorzugsweise 30 bis 70 %, vorzugsweise 40 bis 60 % der theoretischen Dichte (TD) des reinen SiC (diese liegt bei 3,215 g/cm³) entspricht. Handelsübliche RSiC-Formkörper weisen Dichten von bis zu 85 % TD und darüber auf.

Die offene Porosität des RSiC-Formkörpers liegen zwischen 15 und 35 Volumen-%.

Gleichzeitig können die Poren der RSiC-Formkörper sehr klein sein und eine äußerst gleichmäßige Porenverteilung aufweisen, was den Formkörper hervorragend dazu eignet, als Filter, insbesondere Dieselpartikelfilter (also als Filter für Partikel, die bei der Verbrennung im Dieselmotor entstehen) verwendet zu werden.

Die mittlere Porengröße der Poren eines aus dem anmeldungsgemäßen Versatz hergesellten RSiC-Formkörpers kann sehr gering sein und liegt im Bereich zwischen 1 und 15 µm. Die mittlere Porengröße handelsüblicher RSiC-Formkörper liegt bei etwa 40 µm.

In den Figuren sind dargestellt Abbildungen von Gefügebildern dreier RSiC-Formkörper, die jeweils aus unterschiedlichen Versätzen erstellt worden sind. Die Versätze wurden nach ihrer Formgebung jeweils bei 2050°C und einer Stunde Haltezeit in Argon-Atmosphäre gebrannt. Die SiC-Körnung in allen Versätzen enthält 70 Masse-% Grobkorn mit einer mittleren Korngröße d₅₀ von 3µm und 30 Masse-% Feinkorn mit einer Korngröße unter 1 µm. Der verwendete organische Binder enthält 36 Masse-% Kohlenstoff.

Der Versatz setzte sich zusammen beim RSiC-Formkörper nach
- Figur 1: aus 62,5 Masse-% SiC und 37,5 Masse-% organischem Binder,
- Figur 2: aus 57,7 Masse-% SiC, 34,3 Masse-% organischem Binder und 8 Masse-% SiO₂ und
- Figur 3: aus 54,1 Masse-% SiC, 30,9 Masse-% organischem Binder und 15 Masse-% SiO₂.

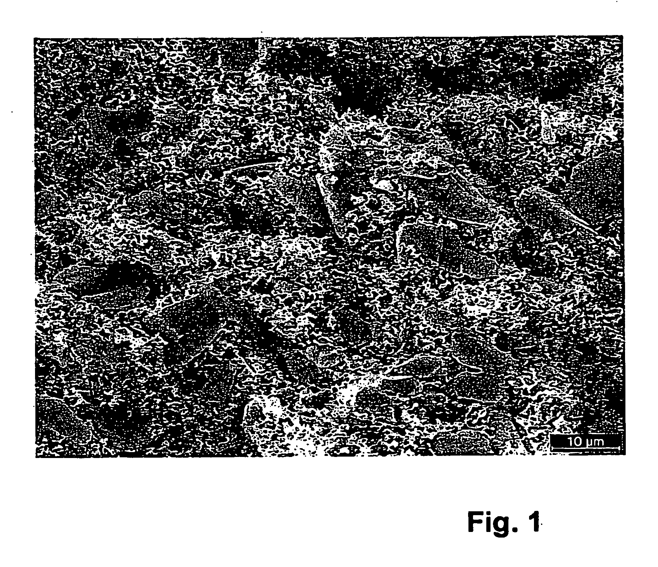

Der RSiC-Formkörper nach Figur 1, der aus einem nicht der Erfindung entsprechenden Versatz erstellt wurde; weist weite Bereiche aus ungebundenem Kohlenstoff auf, der beim Brand nicht entfernt werden konnte und sich zwischen Bereichen aus SiC-Kristallen angelagert hat. Die Bereiche aus ungebundenem Kohlenstoff sind in Figur 1 als helle Fäden (Flocken) zu erkennen, die sich zwischen den größeren, grauen SiC-Kristallen angelagert haben.

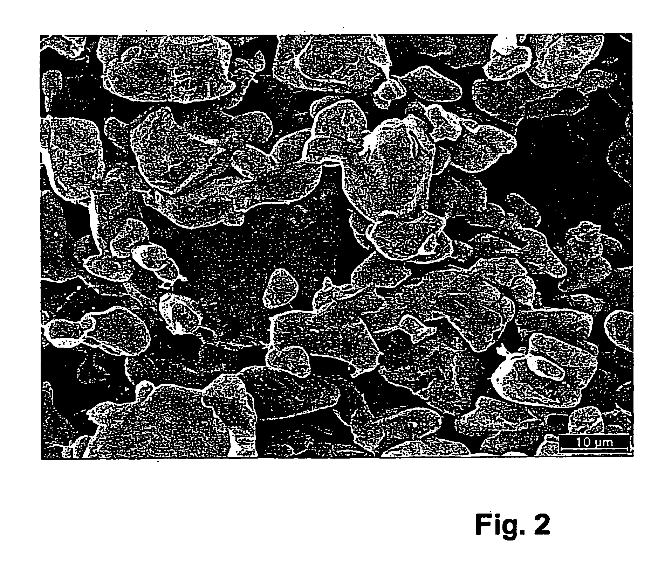

Der aus einem erfindungsgemäßen Versatz erstellte Formkörper gemäß Figur 2 enthält praktisch nur noch SiC-Kristalle, denen allenfalls vereinzelt noch kleine (helle) Reste aus Kohlenstoff anhaften.

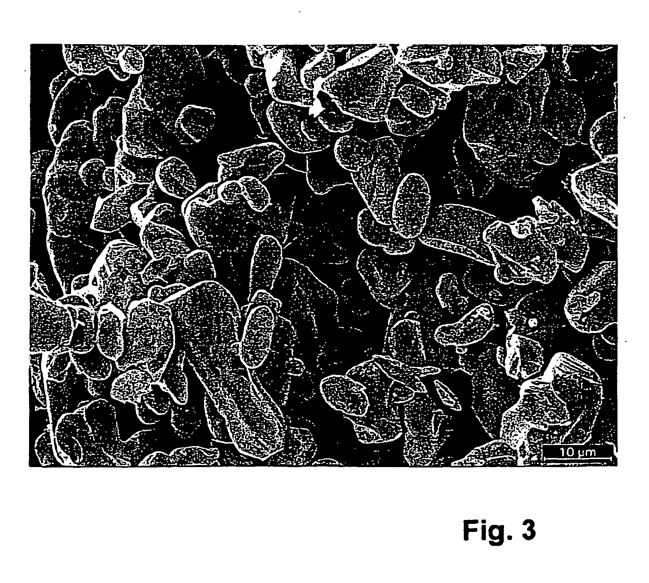

Schließlich ist beim RSiC-Formkörper nach Figur 3, der ebenfalls aus einem erfindungsgemäßen Versatz erstellt wurde, Kohlenstoff nicht mehr nachzuweisen.

## Patentansprüche

1. Versatz zur Erstellung eines feuerfesten keramischen RSiC-Formkörpers mit einer porösen Matrix, enthaltend
1.1 eine Körnung aus Siliciumkarbid,
1.2 ein organisches Bindemittel und
1.3 wenigstens eine der folgenden Komponenten: Eine reine SiO₂-Komponente oder eine unter thermischer Behandlung SiO₂-bildende Komponente in einem Anteil zwischen 2 und 35 Masse-%, wobei
1.4 das Siliciumcarbid eine bi-modale Kornverteilung mit einem Grobkornanteil zwischen 50 und 90 Masse-% und einen Feinkornanteil zwischen 10 und 50 Masse-% aufweist und wobei
1.5 das Feinkorn des Siliciumcarbid eine Korngröße unter 2µm, vorzugsweise zwischen 0,1 und 1µm aufweist,
1.6 die SiO₂-Komponente in Pulverform vorliegt und wobei
1.7 der Anteil an Tonmineralien unter 2 Masse-% liegt.

2. Versatz nach Anspruch 1, bei dem das Siliciumcarbid in Pulverform vorliegt.

3. Versatz nach Anspruch 1, bei dem das Grobkorn des Siliciumcarbid eine Korngröße zwischen 2 und 120µm, vorzugsweise zwischen 2 und 25 µm, vorzugsweise zwischen 2 und 10µm aufweist.

4. Versatz nach Anspruch 1, bei dem die SiO₂-Komponente Quarz ist.

5. Versatz nach Anspruch 1, bei dem die SiO₂-bildende Komponente wenigstens ein Silicium-Alkoxid, ein Organosilan oder ein Acetoxysilan umfasst.

6. Versatz nach Anspruch 1, bei dem die SiO₂-Komponente eine Korngröße unter 20µm, vorzugsweise zwischen 1 und 20µm, vorzugsweise zwischen 2 und 10µm, vorzugsweise zwischen 3 und 8µm aufweist.

7. Versatz nach Anspruch 1 mit einem Anteil
7.1 an Siliciumcarbid zwischen 30 und 97 Masse-%, vorzugsweise zwischen 40 und 80 Masse-%,
7.2 an organischem Bindemittel zwischen 1 und 55 Masse-%, vorzugsweise zwischen 1 und 40 Masse-% und
7.3 an der SiO₂-Komponente oder an der SiO₂-bildenden Komponente zwischen 7 und 20 Masse-%.

8. Verfahren zur Herstellung eines feuerfesten Formkörpers mit einer porösen Matrix aus einem Versatz nach Anspruch 1, wobei der Versatz zunächst zum Formkörper geformt und anschließend durch thermische Behandlung zu einem keramischen Formkörper gesintert wird.

9. Verfahren nach Anspruch 8, bei dem der Versatz durch ein Foliengießverfahren oder durch ein Strangpressverfahren zum Formkörper geformt wird.

10. Verfahren nach Anspruch 8, bei dem der Versatz bei Temperaturen zwischen 1800°C und 2500°C, vorzugsweise bei Temperaturen zwischen 1850°C und 2150°C gesintert wird.

11. Keramischer RSiC-Formkörper, hergestellt durch ein Verfahren nach Anspruch 8, dessen Dichte 40 bis 60 % der theoretischen Dichte des reinen SiC entspricht, mit einer offenen Porosität zwischen 1 und 35 Volumen-% und einer mittleren Porengröße zwischen 1 und 15 µm.

12. Verwendung eines Formkörpers nach Anspruch 11 als Dieselpartikelfilter.

## Claims

1. A batch composition for producing a refractory ceramic RSiC shaped body with a porous matrix comprising
1.1 a silicon carbide grain;
1.2 an organic binder and
1.3 at least one of the following components: A pure SiO₂ component or a component forming SiO₂ when thermally treated, in an amount between 2 and 35% by mass; with
1.4 the silicon carbide having a bimodal grain size distribution with a coarse grain fraction between 50 and 90% by mass and a fine grain fraction between 10 and 50% by mass; and with
1.5 the fine grain of silicon carbide having a grain size below 2 µm, preferably between 0.1 and 1 µm;
1.6 the SiO₂ component being present in the form of a powder; and with
1.7 the clay minerals fraction being below 2% by mass.

2. A batch composition according to claim 1, in which the silicon carbide is present in the form of a powder.

3. A batch composition according to claim 1, in which the coarse grain of silicon carbide has a grain size between 2 and 120 µm, preferably between 2 and 25 µm, preferably between 2 and 10 µm.

4. A batch composition according to claim 1, in which the SiO₂ component is quartz.

5. A batch composition according to claim 1, in which the SiO₂-forming component comprises at least a silicon alkoxide, an organosilane or an acetoxysilane.

6. A batch composition according to claim 1, in which the SiO₂ component has a grain size below 20 µm, preferably between 1 and 20 µm, preferably between 2 and 10 µm, preferably between 3 and 8 µm.

7. A batch composition according to claim 1 with a fraction
7.1 of silicon carbide between 30 and 97% by mass, preferably between 40 and 80% by mass;
7.2 of organic binder between 1 and 55% by mass, preferably between 1 and 40% by mass; and
7.3 of the SiO₂ component or the SiO₂-forming component between 7 and 20% by mass.

8. A method for producing a refractory shaped body with a porous matrix from a batch composition according to claim 1, wherein the batch composition is first shaped into the shaped body and subsequently sintered by means of thermal treatment to a ceramic shaped body.

9. A method according to claim 8, in which the batch composition is shaped into the shaped body by a film casting method or by an extrusion method.

10. A method according to claim 8, in which the batch composition is sintered at temperatures between 1800 °C and 2500 °C, preferably at temperatures between 1850 °C and 2150 °C.

11. A ceramic RSiC shaped body produced by a method according to claim 8, the density of which corresponds to 40 to 60 % of the theoretical density of pure SiC, with an open porosity between 15 and 35% by volume and an average pore size between 1 and 15 µm.

12. The use of a shaped body according to claim 11 as diesel particulate filter.

## Revendications

1. Mélange destiné à la fabrication d'un corps moulé céramique réfractaire en RSiC à partir d'une matrice poreuse, contenant
1.1 des granules en carbure de silicium,
1.2 un liant organique et
1.3 au moins un des composants suivants: un composant en SiO₂ pur ou un composant formant du SiO₂ sous traitement thermique, dans une proportion comprise entre 2 et 35 % en poids,
1.4 ledit carbure de silicium présentant une granulométrie bimodale avec une proportion de particules grossières comprise entre 50 et 90 % en poids et une proportion de particules fines comprise entre 10 et 50 % en poids et
1.5 lesdites particules fines dudit carbure de silicium présentant une granulométrie inférieure à 2 µm, de préférence comprise entre 0,1 et 1 µm,
1.6 ledit composant SiO₂ se présentant sous forme de poudre et
1.7 la proportion de minéraux argileux étant inférieure à 2 % en poids.

2. Mélange selon la revendication 1, ledit carbure de silicium se présentant sous forme de poudre.

3. Mélange selon la revendication 1, lesdites particules grossières du carbure de silicium présentant une granulométrie comprise entre 2 et 120 µm, de préférence entre 2 et 25 µm, de préférence entre 2 et 10 µm

4. Mélange selon la revendication 1, ledit composant en SiO₂ étant du quartz.

5. Mélange selon la revendication 1, ledit composant formant du SiO₂ comprenant au moins un alkoxyde de silicium, un organosilane ou un acétoxysilane.

6. Mélange selon la revendication 1, ledit composant en SiO₂ présentant une granulométrie inférieure à 20 µm, de préférence comprise entre 1 et 20 µm, de préférence entre 2 et 10 µm, de préférence entre 3 et 8 µm.

7. Mélange selon la revendication 1, la proportion
7.1 dudit carbure de silicium étant comprise entre 30 et 97 % en poids, de préférence entre 40 et 80 % en poids,
7.2 dudit liant organique étant comprise entre 1 et 55 % en poids, de préférence entre 1 et 40 % en poids et
7.3 dudit composant en SiO₂ ou composant formant du SiO₂ étant comprise entre 7 et 20 % en poids.

8. Procédé de fabrication d'un corps moulé réfractaire à partir d'une matrice poreuse constitué d'un mélange selon la revendication 1, ledit mélange étant d'abord transformé en corps moulé et ensuite, par traitement thermique, fritté pour obtenir un corps moulé céramique.

9. Procédé selon la revendication 8, ledit mélange étant transformé en corps moulé au moyen d'un procédé de coulage en bande ou d'un procédé d'extrusion.

10. Procédé selon la revendication 8, ledit mélange étant fritté à des températures comprises entre 1800 °C et 2500 °C, de préférence à de températures comprises entre 1850 °C et 2150 °C.

11. Corps moulé céramique en RSiC, fabriqué par un procédé selon la revendication 8, dont la densité correspond à 40 à 60 % de la densité théorique du SiC pur, avec une porosité ouverte comprise entre 15 et 35 % en volume et une taille moyenne des pores comprise entre 1 et 15 µm.

12. Utilisation d'un corps moulé selon la revendication 11 en tant que filtre à particules diesel.
